(19) Europäisches Patentamt / European Patent Office / Office européen des brevets

(11) **EP 2 230 747 A1**

(12) **EUROPEAN PATENT APPLICATION**

(43) Date of publication:
**22.09.2010  Bulletin 2010/38**

(51) Int Cl.:
*H02K 1/24* (2006.01)      *H02K 23/00* (2006.01)
*H02K 29/03* (2006.01)

(21) Application number: **10425073.3**

(22) Date of filing: **17.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **19.03.2009  IT BS20090053**

(71) Applicant: **Ride S.r.l.**
**25012 Calvisano (Brescia) (IT)**

(72) Inventor: **Bertola, Paolo**
**25012 Calvisano (Brescia) (IT)**

(74) Representative: **Sangiacomo, Fulvia**
**BIESSE S.r.l.,**
**Corso Matteotti 42**
**25122 Brescia (IT)**

(54)  **System for accentuating the irreversibility of permanent magnet DC motors**

(57)    Concerns a system for accentuating the irreversibility of permanent magnet direct current motors through a variation of the magnetic jump (Cogging Torque), according to which the entrance values (2a) of each slot of the rotor, of the angular amplitude ($\delta$) of each magnet of the stator and of the air gap (Tr) are correlated so that, with the motor not powered and with the feed cables not short circuiting, the torque (T) to be applied to the drive shaft to make it turn has a value of between 0,025 and 0,06 Nm, and where the ratio (S) of the measure of the entrance opening slot ($2\alpha$) over the measure of the angular distance ($\beta = 360°/N_{slots}$) of the slots is between 0,23 and 0,56.

FIG. 1

**Description**

**Field of the Invention**

This invention concerns in general the electric motor field and refers in particular to a system for accentuating the irreversibility of direct current motors provided with: one stator comprising at least one polar couple made up of permanent magnets; a rotor equipped with an output shaft and made up of a pack of laminations with teeth that finish with a tile and delimit slots housing a coil winding; and an air gap between the stator and rotor.

**State of the Technique**

The irreversibility is here intended as the capacity of a motor to resist, that is to say not turn, at a torque applied from the outside to the relative shaft when the motor is not powered and the feed cables are not short circuiting.

A requirement needed in the motors and geared motors using direct current for use with some applications is in fact an irreversibility that the most usual motors, because of their configuration, in general do not posses. Therefore, to increase the irreversibility of a motor very often either brakes are adopted associated with the drive shaft or kinematic motions studied for the applications in which the motor is used and designed to create sufficient friction to make up for the insufficient capacity of the motor not to turn, offering resistance to the load it is subjected to.

It should also be noted that direct current motors are subject to a so-called magnetic jump (Cogging Torque) consisting in a generated oscillating torque alternating with the passage of the portions of laminations, usually iron, and portions of air or entrance openings of the slots of the rotor in line with the edges of the magnets parallel to the rotation axis of the motor. If the motor were not electrically powered, the magnetic jump would simply correspond to the torque to be overcome to make the drive shaft turn at an angle equal to 360°/N slots. Therefore, the magnetic jump must be overcome every 360°/ N slots.

When the motor has to be used with applications with irreversibility requirements, the magnetic jump becomes an advantage because it represents a torque to be overcome every 360°/ N slots that opposes the tendency of the system to return to the potentially minimum energy position. However, the magnetic jump of an electrically powered motor could be insufficient to ensure the irreversibility of the motor in particular, specific applications in which the load tending to make the shaft turn from the outside becomes relatively high.

**Objective and Summary of the Invention**

This invention was conceived to make up for such an insufficiency, and correspondently it proposes a system designed to increase the magnetic jump in direct current motors so as to advantageously allow their use also where a higher irreversibility level is required.

The objective was reached by suitably choosing the values of the aperture each slot of the pack of laminations, of the angular amplitude of the stator magnets and of the air gap so that, when the motor is not powered, the torque (T) applicable on the drive shaft to make it turn corresponds to a value from 0,025 to 0,06 Nm depending on the diameter and the number of slots the rotor has.

Basically, according to the invention the procedure is i) to reduce the width of every tooth of the laminations the opposite ends of which delimit the air, that is the opening, of the slot entrance, ii) to configure every magnet of the polar couple or couples so that its extremities finish preferably near one of the ends of a lamination tooth which from time to time is in line with it, and iii) to adjust the air gap in relation to the lamination tooth on a level with the terminal parts of each magnet, with the result that the levels of the magnetic jump (Cogging Torque) can increase even as much as 100% or even up to 200% with respect to the levels of the magnetic jumps that are reached with a traditional lamination geometry.

**Brief description of the Drawings**

Further details of the invention will however become more evident in the continuation of the description made in reference to the enclosed indicative and not limiting drawings, in which:

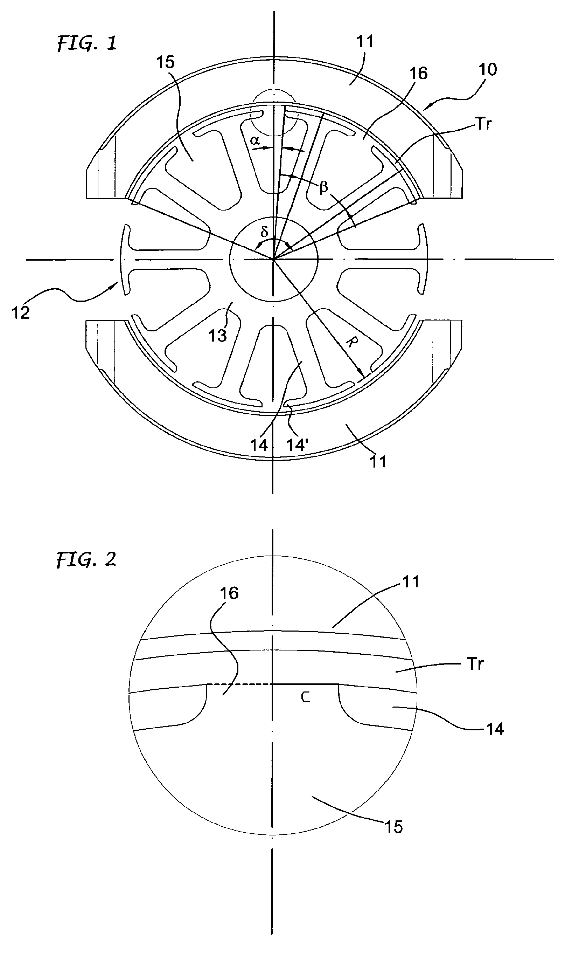

  Fig. 1 shows a view of a cross section of a motor, which for simplicity is without winding; and
  Fig. 2 shows an enlarged view of the circled detail in Fig. 1.

Detailed Description of the Invention

The one represented is an example of a direct current motor having a stator 10 that is formed of at least a polar couple in the form of permanent magnets 11, and a rotor 12 that is made up of a pack of laminations 13, the latter configured to delimit radial teeth 14, which end each with a tile 14' and delimit between them a sequence of slots 15 each with an air gap or entrance opening 16.

In reference again to the drawings, where:

$\alpha$ = half opening of slot entrance 15,
$\beta$ = 360°/$N_{slots}$
$\delta$ = angular amplitude of the surface of every magnet 11 nearest to the lamination, measured at the ends of the internal surface of the magnet without taking into account the union bevels or radiuses that characterize the terminal parts of the magnet,
**C** = rectilinear segment equal to 1/2 of the opening of slot entrance,
**R** = radius of the stator laminations,

and where:

$\alpha$ = arcsin (C/R)
the ratio **S** between the opening of slot entrance and the angle $\beta$= 360°/N slots is defined
as **S = 2$\alpha$/$\beta$**.

The purpose of the invention is aimed at making sure that the torque (T) to be applied, with motor not powered, to the motor drive shaft, to produce rotation has a T value from 0,025 to 0,06 Nm, a value that is reached and respected when such a ratio

$$\textbf{S is comprised between 0,23 and 0,56} \qquad (1.1)$$

but not if and when at least one of the following relations (1.2) and (1.3) recur

$$\boldsymbol{\beta(n+1)+2/3\alpha\leq \delta \leq\beta(n+1)+2\alpha} \qquad (1.2)$$

where,
**n** is a positive even integer (including the zero), if half of the total number of the slots of the lamination pack is an even number, that is to say, **N** $_{tot\ slots}$/2 = even number
whereas,
**n** is an odd positive integer, if half of the total number of the slots of the lamination pack is an odd number, that is to say N $_{tot\ slots}$/2= odd number;

$$\boldsymbol{m\beta + 2\alpha \leq \gamma \leq \beta(m+2) - 2\alpha} \qquad (1.3)$$

where,
$\gamma$ defines the angular torque sectors at the ends of each magnet, symmetrical compared to its axis of symmetry, exactly the same angular width of the tile of the teeth of the lamination pack,
**m** is a positive odd integer (including zero), if half of the total number of the slots of the lamination pack is an odd number, that is to say N $_{tot\ slots}$/2= odd numbers,
whereas,
**m** is a positive even integer, if half of the total number of slots of the lamination pack is an even number, that is to say N $_{tot\ slots}$/2= odd numbers. Then, defining as air gap **Tr** the air space between the magnet and lamination pack of the rotor, the following relation must be satisfied:
**Tr $\geq$ 0,8 mm**

**Claims**

1. System for accentuating the irreversibility of permanent magnet direct current motors through a variation of the magnetic jump (Cogging Torque), where a motor has: a rotor equipped with a drive shaft and a given radius (R) of the relative pack of laminations and a number of slots with an angular distance ($\beta$= 360°/N $_{slots}$), each with an entrance opening (2$\alpha$) defined by tiles; one stator comprising at least a polar couple made up of permanent magnets each with an angular amplitude ($\delta$) measured at the ends of its internal surface contiguous to the rotor; and an air gap (Tr), **characterised in that** the values of the entrance opening (2$\alpha$) of each slot, of the angular amplitude ($\delta$) of each magnet and of the air gap (Tr) are correlated so that, with the motor not powered and with the feed cables not short circuiting, the torque (T) to be applied to the drive shaft to make it turn must have a value of between 0,025 and 0,06 Nm.

2. System according to claim 1, **characterised in that** said torque value (T) is reached where the ratio (S) of the measure of the entrance opening slot (2$\alpha$) over the measure of the angular distance ($\beta$= 360°/N $_{slots}$) of the slots is between 0,23 and 0,56 and at the same time where magnets are present having an angular amplitude ($\delta$) outside the relation (1.2) in the specification and, as regards to the value of the air gap ($T_R$), this is outside the relation (1.3), the value of the magnetic gap ($T_R$) being less than 0,8 mm, in correspondence with the angular sectors ($\gamma$) at the ends of each magnet, symmetrical with regards to the radial symmetrical axis of the magnet itself, exactly the same angular amplitude as the panel.

3. System according to claims 1 and 2, **characterised in that** said torque value (T) is not met if, for a ratio (S )of between 0,23 and 0,56, at least one of the relations (1.2) and (1.3) in the specification are satisfied.

4. System according to claims 1 and 2, **characterised in that** said torque value (T) is not met if, not respecting either relation (1.2) or relation (1.3), the ratio (S ) is less than 0,23.

*FIG. 1*

*FIG. 2*

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

EP 10 42 5073

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2005/029894 A1 (EGAWA KANAME [JP] ET AL) 10 February 2005 (2005-02-10) <br> * paragraphs [0005] - [0006]; figure 68 * <br> ----- | 1-4 | INV. <br> H02K1/24 <br> H02K23/00 <br><br> ADD. <br> H02K29/03 |

TECHNICAL FIELDS
SEARCHED      (IPC)

H02K

## INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 9 July 2010 | Le Guay, Philippe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04E07)

Europäisches
Patentamt

European
Patent Office

Office européen
des brevets

**INCOMPLETE SEARCH
SHEET C**

Application Number

EP 10 42 5073

Claim(s) searched incompletely:
      1-4

Reason for the limitation of the search:

Concerning Claim 1 :
Clear 1 is not clear for the following reasons
- the expression: "for accentuating the irreversibility of PM DC motors"
could not been understood in the context of dynamo-electric machines.

- the given range values of 0,0025 and 0,06 Nm appear to be absolute
numerical values which are not dependent of the size of the electric
motor. Moreover, it is nowhere specifying where these values are coming
from, it therefore appears that these numerical values are given
arbitrarily.

- the skilled person is not given any information or feature how the
given range value is to be obtained. Thus it is merely specified that the
entrance opening (2?), the angular amplitude (?) and the air gap (Tr) are
correlated, without however defining the type of said correlation.

It therefore appear impossible to perform a meaningful search of Claim 1.

Concerning Claims 2 to 4:
These claims depending on Claim 1, the reasoning hereabove applies for
them as well.
However, considering more particularly Claim 2, the skilled person is
given a range value of a ratio S which should enable him to achieve the
torque range value given in Claim 1. Said ratio is defined as following:
S = 2?/?
It should however be noted that the angle ? is not one of the three
correlated values as disclosed in Claim 1.
Moreover, here again, it is nowhere specifying where these values are
coming from, it therefore appears that these numerical values are given
arbitrarily.
Concerning the second part of Claim 2 the values of ? and of Tr are
defined as being outside the relations (1.2) and (1.3) respectively, said
relations being given in the description.
Therefore said values are defined by telling the skilled person what they
should not be, moreover by the mean of a relation which is not given
within the claim.

Considering more particularly Claim 3 and Claim 4, these claims are
trying to define under which conditions the given range values of Claim 1
are not met.
Claims 3 and 4 are therefore not consistent with Claim 1 from which they
depend.
It therefore appear impossible to perform a meaningful search of Claims
2, 3 and 4.

## ANNEX TO THE EUROPEAN SEARCH REPORT
## ON EUROPEAN PATENT APPLICATION NO.

EP 10 42 5073

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2010

| Patent document cited in search report | Publication date | Patent family member(s) | Publication date |
|---|---|---|---|
| US 2005029894 A1 | 10-02-2005 | NONE | |

EPO FORM P0459

For more details about this annex : see Official Journal of the European Patent Office, No. 12/82